# EUROPEAN PATENT SPECIFICATION

(11) **EP 2 196 440 B1**
(45) Date of publication and mention of the grant of the patent: **31.08.2011**
(21) Application number: 09177058.6
(22) Date of filing: 25.11.2009
(51) Int. Cl.: C03B 33/03, C03B 33/07

(54) **Method and machine for cutting glass sheets along predetermined lines**
Verfahren und Vorrichtung, um eine Glasscheibe entlang einer Ziellinie zu schneiden
Procédé et appareil de découpe d'une feuille de verre le long d'un trait prédeterminé

(30) Priority: 10.12.2008 IT TO20080919
(43) Date of publication of application: 16.06.2010
(73) Proprietor: BIESSE S.p.A., 61100 Pesaro Urbino (IT)
(72) Inventor: Aimar, Giacomo, I-12010, Cervasca (CN) (IT); Sideri, Paolo, I-61020, Sant'Angelo in Lizzola (PU) (IT)
(74) Representative: Notaro, Giancarlo

(56) References cited:
- EP-A- 0 807 609
- EP-A- 1 845 068
- EP-A- 1 975 131
- JP-A- 2004 066 636

## Description

The present invention refers to a method and a respective machine for cutting glass sheets along predetermined lines, wherein each glass sheet is cut several times obtaining smaller sheets.

The invention is particularly advantageously applied to cutting laminated glass sheets, of the type comprising an upper glass sheet, a lower glass sheet and an intermediate film made of synthetic plastic material. However, the invention is also applicable to one-piece glass sheets.

Currently, when cutting laminated glass sheets, after cutting along a first transverse line the remaining portion of the sheet is removed from the work surface and moved to an auxiliary support surface in order to clear the work surface of the cutting machine. Subsequently, the sheet strip obtained through the first cutting is rotated by 90 degrees on the work surface and moved rearwardly or advanced with respect to the cutting line to perform further cutting operations along other predetermined lines.

The need to have an auxiliary support surface, alongside the work surface, whereon the remaining pieces of the sheet can be moved during the subsequent cutting of the cut strip, considerably increases the overall dimensions and requires many operations to load and unload the sheets on/from the work surface, operations that imply a lot of waste of time.

In a known variant, the auxiliary support surface is obtained from an extension of the work surface itself and the remaining sheet portion is moved rearwardly, with respect to the cutting line, until it reaches a position that allows the remaining sheet not to interfere with the rotation of the cut strip.

A method and a machine according to the preambles of claims 1 and 11 is known from any of documents EP 1 975 131 A and EP 0 807 609 A.

The object of the present invention is that of providing a method of the type described above that is simple to implement, inexpensive, and simultaneously capable of guaranteeing maximum efficiency, functionality and versatility and also capable of reducing the overall dimensions.

With the aim of obtaining such object the invention aims at providing a method for performing the cutting operations on a glass sheet having the characteristics indicated in claim 1.

Another object of the invention is a machine capable of implementing the abovementioned method, according to the specifications of claim 11.

In a preferred embodiment, only the front edge of the of the remaining portion of the sheet is raised by means of a raising system which is moveable vertically between an idle position wherein the system is incorporated in the work surface, and an operating position wherein the system raises and maintains the front edge of the sheet spaced from the work surface.

Preferably, the raising system comprises at least two series of aligned connecting rods wherein each series is accommodated in a respective cavity obtained on the work surface. Each cavity is extended orthogonally with respect to the cutting line and the first ends of connecting rods of a series are connected in an articulated manner to the lower edge of the respective cavity, and the second ends of the connecting rods of each series are connected to each other by means of a connection bar. The end portion of the connection bar is in turn connected in an articulated manner to the lower edge of the respective cavity, and the series of connecting rods are simultaneously actuated by actuators to raise the front edge of the remaining portion of the sheet.

In an alternative embodiment, the raising system comprises a series of pneumatic cylinders accommodated in a respective cavity obtained on the work surface. The cavity is extended parallel with respect to the cutting line. The pneumatic cylinders are actuated simultaneously to raise the front edge of the remaining portion of the sheet.

Furthermore, provided for are holding means for holding the rear edge of the remaining portion of the sheet, when the front edge of the remaining portion of the sheet is raised. Such holding means are preferably made up of at least two aligned suction cups arranged parallel with respect to the cutting line and in proximity to the rear edge of the remaining portion of the sheet.

In an alternative embodiment, the remaining portion of the sheet is entirely raised with respect to the work surface by means of a raising system. In this case, the raising system comprises at least two aligned series of connecting rods accommodated in respective cavities obtained on the work surface, wherein the cavities are extended orthogonally with respect to the cutting line. The first ends of the connecting rods are connected in an articulated manner to the lower edge of the cavities, the second ends of the connecting rods of each series are connected to each other by means of a connection bar, and the connecting rods are actuated simultaneously by an actuator to entirely raise the remaining portion of the sheet. In an alternative, the raising system comprises a plurality of aligned series of pneumatic cylinders accommodated in respective cavities obtained on the work surface, wherein the cavities are extended parallel with respect to the cutting line, and wherein the pneumatic cylinders are actuated simultaneously to entirely raise the remaining portion of the sheet.

The cut portion of the sheet is rotated manually or automatically, but preferably automatically by means of a cup suction which is engaged with the lower sheet of the cut portion and arranged upstream of downstream of the cutting line.

Now, the invention shall be described, strictly for exemplifying and non-limiting purposes, with respect to the figures of the attached drawings, wherein:
- figure 1 is a perspective view of a machine for implementing the method according to the invention,
- figures 2 - 5 are plan schematic views showing various steps of the method according to the invention,
- figures 6 and 7 are side views of two different embodiments of the system for raising the sheet,
- figures 6A and 7A are enlarged sectional views of the two embodiments of the illustrated raising system of figures 6 and 7, and
- figure 8 is a plan view of the machine of figure 1.

Referred to as an example in the present invention is the cutting of a laminated glass sheet. However, as already mentioned above, the method according to the invention may also be applied to the cutting of a one-piece glass sheet.

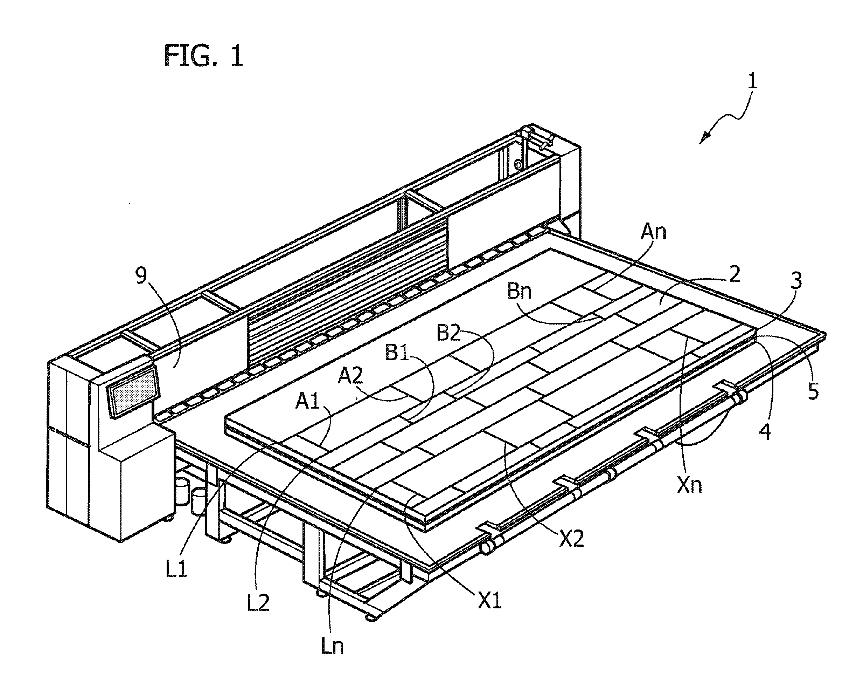

Referring to figure 1 a machine for cutting a laminated glass sheet 2 is indicated in its entirety with 1. The sheet 2 comprises an upper glass sheet 3, a lower glass sheet 4 and an intermediate film 5 made of synthetic plastic material which is interposed between the two glass sheets 3 and 4. In figure 1 the proportions between the thicknesses of the glass sheets 3 and 4 and the intermediate film 5 are exaggerated with the sole aim making the figure itself clearer.

References L1, L2,... Ln on the sheet 2 in figure 1 indicate the predetermined transverse cutting lines to be performed on the sheet 2, while references A1, A2,... An, B1, B2,... Bn,... X1, X2,... Xn indicate the predetermined longitudinal cutting lines to be performed on the sheet 2.

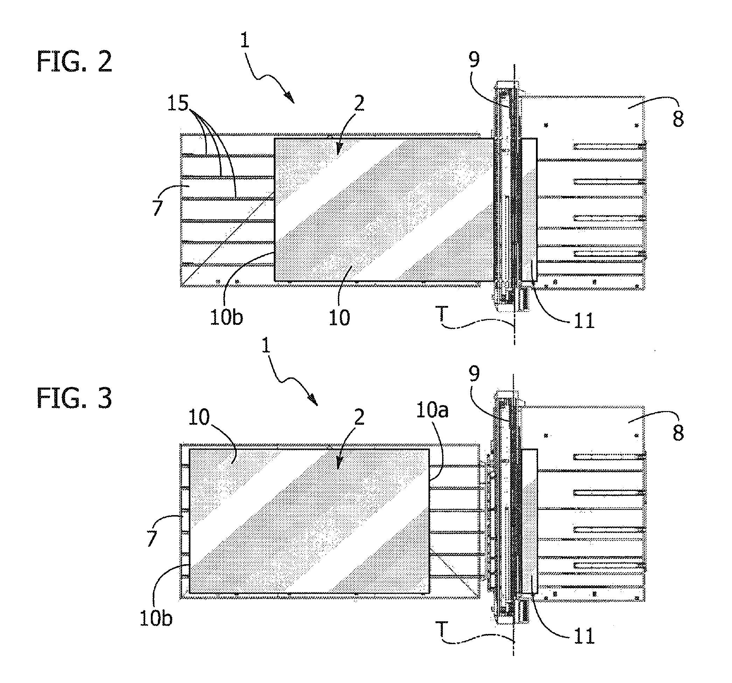

With reference to figures 2 to 5, the machine 1 comprises two support tables 7 and 8 arranged adjacent and coplanar, defining a support surface for the laminated sheet 2 to be cut, and a cutting bridge 9 for the cutting operations along the cutting line T.

In the present description and in the attached drawings, the construction details of the machine 1 and of the cutting bridge 9 are not illustrated, in that they may be obtained in any known manner and also in that they do not fall, considered separately, within the scope of protection of the invention. Same case applies to how the movements of the cutting bridge 9 are controlled. Such movements, according to the prior art are controlled through respective electric motors and drive transmissions neither illustrated nor described. Furthermore, still according to the known art, the electric motors that actuate the various moveable parts of the machine 1 are controlled by programmable control electronic means to allow performing predetermined work cycles on the sheets 2 to be machined.

At the end of the first machining cycle, the laminated glass sheet 2 is cut along the cutting line T, by means of a cutting bridge 9, into two portions 10 and 11 respectively arranged downstream and upstream of the cutting line T (see figure 3).

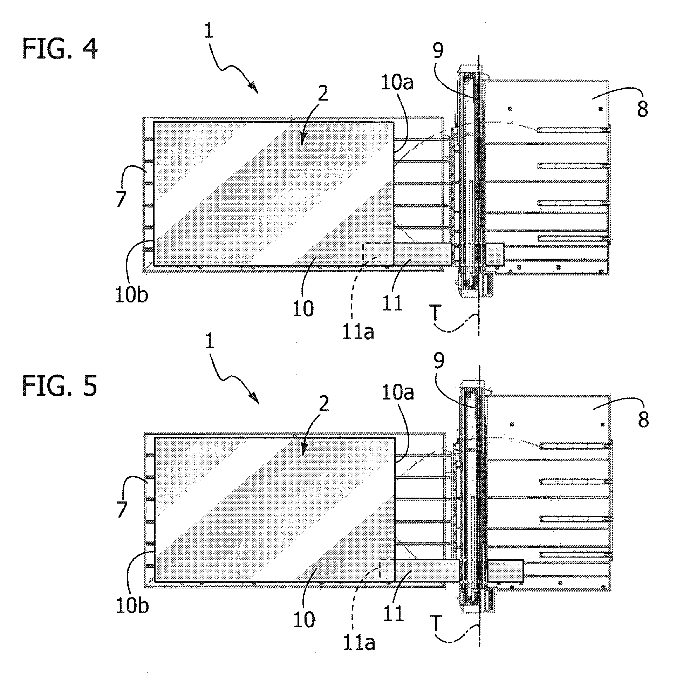

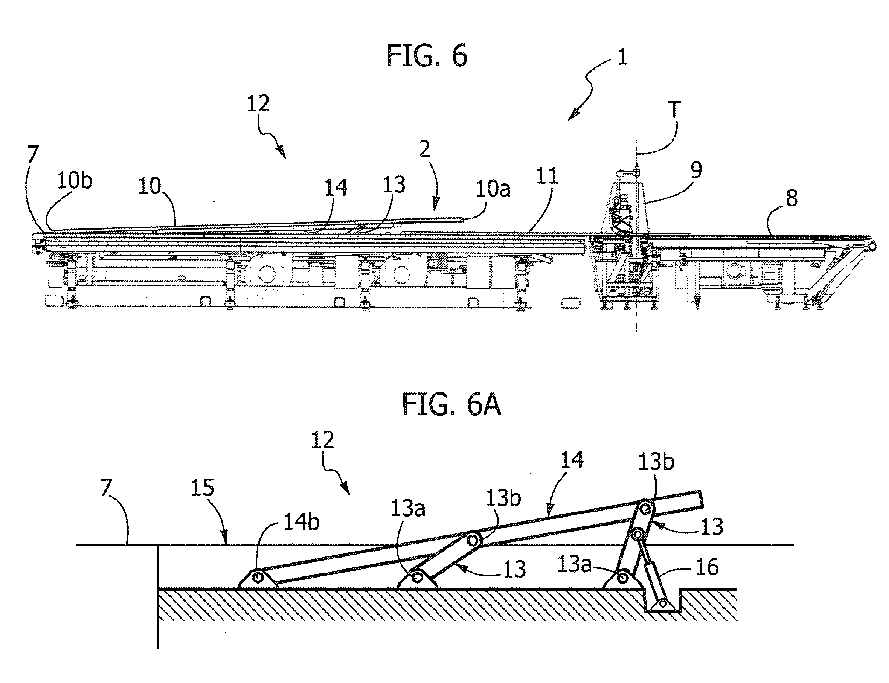

With particular reference to figures 1 to 5, at the end of the first cutting operation along the first transverse line L1 of the series of lines L1, L2, ... Ln observable in figure 1, in first step, illustrated in figure 3, the remaining sheet portion 10 is moved rearwardly on the support table 7 and it is at least partly raised with respect to the work surface defined by the tables 7 and 8. This first step is better illustrated with reference to figure 6. In a second step (figure 4) the cut portion 11 of the sheet 2 is rotated by 90 degrees in any known manner and one end 11a thereof is partly inserted beneath the front edge 10a of the remaining sheet portion 10 which is raised with respect to the work surface 7. The cut portion 11 is thus arranged beneath the cutting bridge 9, and it is advanced or moved rearwardly with respect to the cutting line T, to perform further cutting operations along the predetermined lines indicated with A1, A2, ... An, B1, B2, ... Bn, X1, X2, ... Xn in figure 1.

Referring to figure 6, the front edge 10a of the remaining portion 10 of the sheet is raised by means of a raising system 12 which is moveable vertically between an idle position (not illustrated) wherein the system 12 is incorporated in the work surface 7, and an operating position illustrated in figure 6, wherein the system 12 raises and maintains the front edge 10a of the sheet 10 spaced from the work surface 7.

In the embodiment illustrated in figure 6, the raising system 12 comprises a series of aligned connecting rods 13 (figure 6 shows only the first connecting rod of the first series) wherein each series is accommodated in a respective longitudinal cavity 15 obtained in the work surface 7 (see figure 6A). The cavities 15 are parallel to each other and they are extended orthogonally with respect to the cutting line T (see figure 2) over the entire length of the work surface 7. With reference to figure 6A, the first ends 13a of the connecting rods 13 that are part of the same series, are connected in an articulated manner to the lower edge 15a of the respective cavity 15, and the second ends 13b of the connecting rods 13 that are part of the same series are connected to each other by means of a connection bar 14. The end portion 14b of the connection bar 14 is in turn connected in an articulated manner to the lower edge 15a of the respective cavity 15. The series of connecting rods 13 are simultaneously actuated by actuators 16, for example pneumatic cylinders, to raise the front edge 10a of the remaining portion 10 of the sheet. In particular, the support system performs an articulated parallelogram movement.

In an alternative embodiment not illustrated in the drawings, the raising system 12 instead comprises a series of pneumatic cylinders accommodated in a respective cavity obtained on the work surface. The cavity is extended parallel with respect to the cutting line T. Thus, the pneumatic cylinders are actuated simultaneously to raise the front edge 10a of the remaining portion 10 of the sheet.

Further provided for are holding means, not illustrated in the figures, to hold the rear edge 10b of the remaining portion 10 of the sheet, when the front edge 10a of the remaining portion 10 of the sheet is raised. Preferably, the holding means are made up of a series of suction cups aligned and arranged parallel with respect to the cutting line T and in proximity to the rear edge 10b of the remaining portion 10 of the sheet.

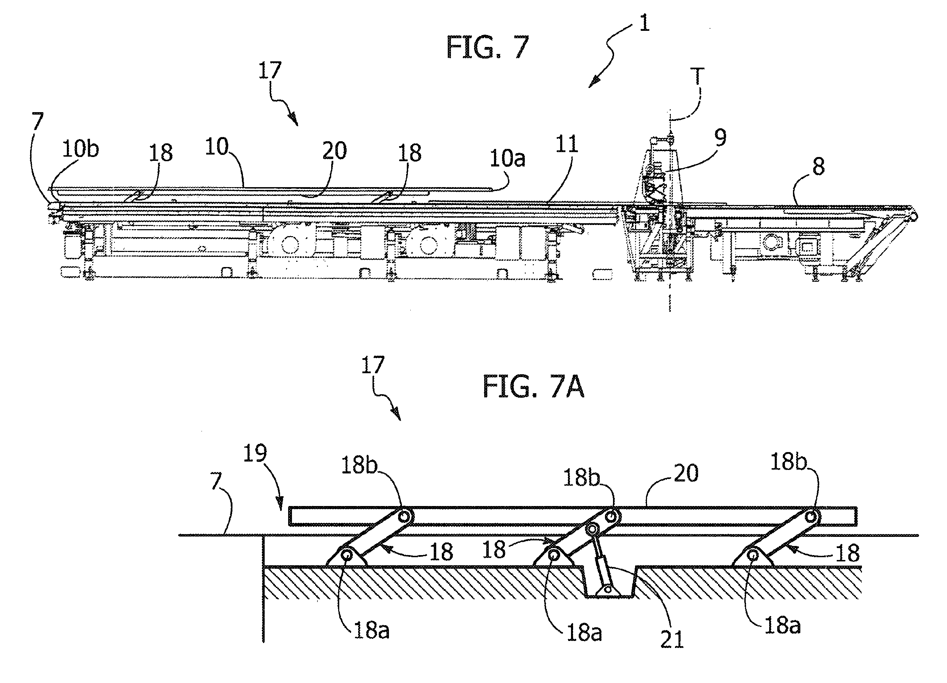

In an alternative embodiment illustrated in figure 7, the remaining portion 10 of the sheet is completely raised with respect to the work surface 7 by means of a different raising system 17 which is also moveable vertically between an idle position wherein the system 17 is incorporated in the work surface, and an operating position wherein the system 17 raises and maintains the remaining portion 10 of the sheet spaced from the work surface 7.

In the embodiment illustrated in figure 7, the raising system 17 comprises several series of aligned connecting rods 18 (figure 7 shows only the first series) wherein each series is accommodated in a respective longitudinal cavity 19 obtained on the work surface 7 (see figure 7A). The cavities 19 are parallel to each other and are extended orthogonally with respect to the cutting line T over the entire length of the work surface 7, just like the cavities 15 in figure 2. With reference to figure 7A, the first ends 18a of the connecting rods 18 that are part of the same series, are connected in an articulated manner to the lower edge 19a of the respective cavity 19, and the second ends 18b of the connecting rods 18 that are part of the same series are connected to each other by means of a connection bar 20. The series of connecting rods 18 are simultaneously actuated by actuators 21 to completely raise the remaining portion 10 of the sheet.

In an alternative embodiment not illustrated, the raising system 17 comprises a plurality of aligned series of pneumatic cylinders accommodated in respective cavities 19 obtained on the work surface 7, wherein each cavity 19 is extended parallel with respect to the cutting line T, and wherein the pneumatic cylinders are actuated simultaneously to raise the remaining portion 10 of the sheet.

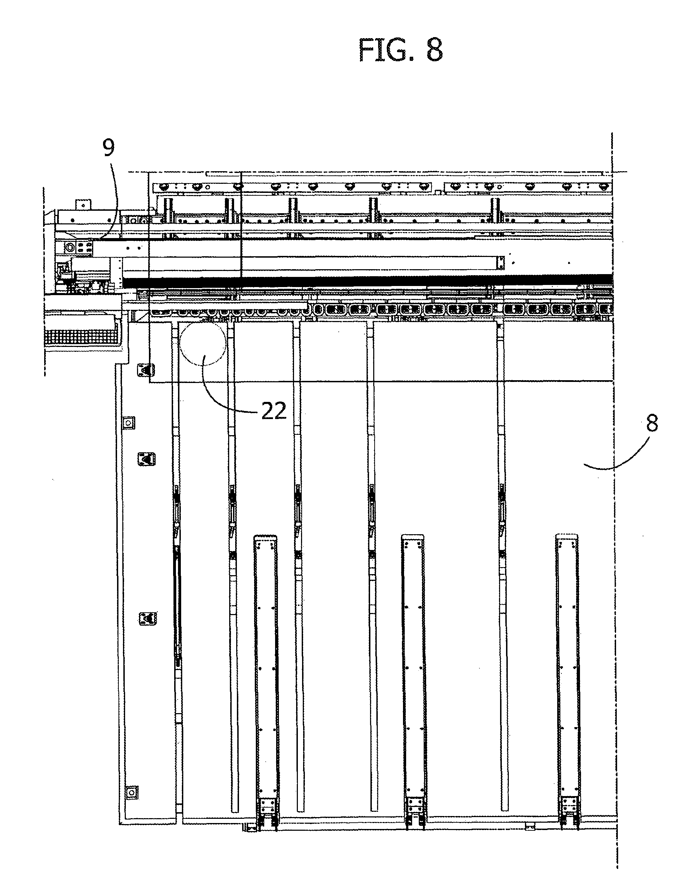

At the end of the step of raising the remaining portion 10 of the sheet, figure 3, the cut portion 11 of the sheet is rotated on itself (see figure 4) by means of a suction cup 22, observable in figure 8, which is engaged with the lower sheet 4 of the cut portion 11 and which is free to rotate on itself. In the illustrated embodiment the suction cup 22 is arranged downstream of the cutting line T on the support table 8. Other embodiments may be provided for wherein such suction cup 22 is arranged upstream of the cutting line T.

## Claims

1. Method for performing cutting operations along predetermined lines (L1, L2, Ln, A1, A2, An, B1, B2, Bn, X1, X2, Xn) on a glass sheet (2), for example a one-piece glass sheet or a laminated glass sheet of the type wherein the sheet (2) comprises an upper glass sheet (3), a lower glass sheet (4) and an intermediate film (5) made of synthetic plastic material,
wherein, after cutting a head portion (11) of said sheet along a transverse line (L1, L2, Ln), the remaining portion (10) of the sheet (2) is moved rearwardly,
and
the cut head portion (11) of said sheet (2) is rotated
said method being **characterised in that**:
- after said cutting of the head portion (11), said remaining portion (10) of the sheet (2) is at least partly raised with respect to the work surface (7), and
- when said cut head portion (11) is rotated, one end (11a) thereof is inserted beneath the raised front edge (10a) of the remaining portion (10) of the sheet (2) in order to position the above mentioned cut portion (11) for performing further cutting operations along predetermined lines (A1, A2, An, B1, B2, Bn, X1, X2, Xn).

2. Method according to claim 1, **characterised in that** said front edge (10a) of the remaining portion (10) of the sheet is raised by means of a raising system (12) which is moveable vertically between an idle position wherein the system (12) is incorporated in the work surface (7), and an operating position wherein the system (12) raises and maintains said front edge (10a) spaced from the work surface (7).

3. Method according to claim 2, **characterised in that** the raising system (12) comprises at least two series of aligned connecting rods (13) wherein each series is accommodated in a respective cavity (15) obtained in the work surface (7), wherein each cavity (15) is extended orthogonally with respect to the cutting line (T), and wherein the first ends (13a) of the connecting rods (13) of a series are connected in an articulated manner to the lower edge (15a) of the respective cavity (15), and the second ends (13b) of the connecting rods (13) of each series are connected to each other by means of a connection bar (14), wherein the end portion of said connection bar (14b) is in turn connected in an articulated manner to the lower edge (15a) of the respective cavity (15), and said series of connecting rods (13) are simultaneously actuated by actuators (16) to raise said front edge (10a) of the remaining portion (10) of the sheet.

4. Method according to claim 2, **characterised in that** the raising system (12) comprises a series of pneumatic cylinders accommodated in a respective cavity obtained in the work surface, wherein said cavity is extended parallel with respect to the cutting line (T), and wherein said pneumatic cylinders are actuated simultaneously to raise said front edge (10a) of the remaining portion (10) of the sheet.

5. Method according to claim 3 or 4, **characterised in that** further provided for are holding means for holding the rear edge of the remaining portion of the sheet, when the front edge (10a) of said remaining portion (20) of the sheet is raised.

6. Method according to claim 5, **characterised in that** the holding means are made up of at least two suction cups aligned arranged parallel with respect to the cutting line (T) and in proximity to the rear edge (10b) of the remaining portion of the sheet.

7. Method according to claim 1, **characterised in that** the remaining portion (10) of the sheet is raised completely with respect to the work surface (7).

8. Method according to claim 7, **characterised in that** said remaining portion (10) of the sheet is raised by means of a raising system (17) which is moveable vertically between an idle position wherein the system (17) is incorporated in the work surface (7), and an operating position wherein the system (17) raises and maintains said remaining portion (10) of the sheet spaced from the work surface (7).

9. Method according to claim 8, **characterised in that** the raising system (17) comprises at least two series of aligned connecting rods (18) wherein each series is accommodated in a respective cavity (19) obtained in the work surface (7), wherein each cavity (19) is extended orthogonally with respect to the cutting line (T), and wherein the first ends (18a) of the connecting rods of a series are connected in an articulated manner to the lower edge (19a) of the respective cavity (19), and the second ends (18b) of the connecting rods of each series are connected to each other by means of a connection bar (20), and said series of connecting rods (18) are simultaneously actuated by actuators (21) to completely raise said remaining portion (10) of the sheet.

10. Method according to claim 8, **characterised in that** the raising system (12) comprises a plurality of aligned series of pneumatic cylinders accommodated in respective cavities obtained in the work surface, wherein said cavities are extended parallel with respect to the cutting line (T), and wherein said pneumatic cylinders are simultaneously actuated to raise said remaining portion (10) of the sheet.

11. Machine for cutting a laminated glass sheet (2), along predetermined lines (L1, L2, Ln, A1, A2, An, B1, B2, Bn, X1, X2, Xn), wherein the sheet (2) comprises an upper glass sheet (3), a lower glass sheet (4) and an intermediate film (5) made of synthetic plastic material,
wherein said machine comprises a surface (7) for supporting the laminated sheet (2) to be cut, and a cutting bridge (9) to perform the cutting operations along a cutting line (T) of the machine,
said machine comprising
- means for moving the remaining portion (10) of the sheet (2) rearwardly after cutting a head portion (11) of said sheet along a transverse line (L1, L2, Ln), and
- means for rotating the cut head portion (11) of said sheet (2),
said machine being **characterized in that** it comprises:
- means for at least partly raising said remaining portion of the sheet (10) with respect to the support surface (7) after said head portion (11) of the sheet has been cut along said transverse line (L1, L2, Ln),
- so that said means for rotating are able to insert one end (11a) of the cut head portion (11) of said sheet (2) beneath the raised front edge (10a) of the remaining portion (10) of the sheet (2), in order to position the abovementioned cut head portion (11) for performing further cutting operations along predetermined lines (A1, A2, An, B1, B2, Bn, X1, X2, Xn) thereon.

12. Machine according to claim 11, **characterised in that** said raising means (12) are suitable to raise a portion of the sheet and to maintain it parallel to the support surface (7).

13. Machine according to claim 11, **characterised in that** said raising means (12) are adapted to raise a portion of the sheet at its front edge, and to maintain it lying of the support surface (7) at its rear edge.

14. Machine according to claim 12 or 13, **characterised in that** said raising means comprise one or more raising elements (14) moveable between a lowered idle position wherein said elements (14) are below said support surface (7) and a raised operating position.

15. Machine according to claim 12 or 13, **characterised in that** said machine further comprises holding means for holding said sheet portion at the raised position.

## Patentansprüche

1. Verfahren zum Ausführen von Schneidvorgängen entlang vorbestimmter Linien (L1, L2, Ln, A1, A2, An, B1, B2, Bn, X1, X2, Xn) auf einer Glasscheibe (2), wie etwa einer Einscheibenglasscheibe oder einer Verbundglasscheibe des Typs, bei dem die Scheibe (2) eine obere Glasscheibe (3), eine untere Glasscheibe (4) und eine Zwischenfolie (5) enthält, die aus einem synthetischen Kunststoffmaterial besteht,
wobei nach dem Schneiden eines Kopfabschnittes (11) der Scheibe entlang einer querverlaufenden Linie (L1, L2, Ln) der verbleibende Abschnitt (10) der Scheibe (2) rückwärtig bewegt wird, und
der geschnittene Kopfabschnitt (11) der Scheibe (2) gedreht wird,
wobei das Verfahren **dadurch gekennzeichnet ist, dass**:
- nach dem Schneiden des Kopfabschnittes (11) der verbleibende Abschnitt (10) der Scheibe (2) im Bezug auf die Arbeitsfläche (7) wenigstens teilweise angehoben wird und
- wenn der geschnittene Kopfabschnitt (11) gedreht wird, ein Ende (11a) desselben unter den angehobenen vorderen Rand (10a) des verbleibenden Abschnittes (10) der Scheibe (2) geschoben wird, um den oben erwähnten, geschnittenen Abschnitt zur Ausführung weiterer Schnittvorgänge entlang vorbestimmter Linien (A1, A2, An, B1, B2, Bn, X1, X2, Xn) zu positionieren.

2. Verfahren nach Anspruch 1, **dadurch gekennzeichnet**, das der vordere Rand (10a) des verbleibenden Abschnittes (10) der Scheibe mit Hilfe eines Hebesystems (12) angehoben wird, das zwischen einer Ruhestellung, in der das System (12) in der Arbeitsfläche (7) enthalten ist, und einer Arbeitsstellung vertikal beweglich ist, in der sich das System (12) anhebt und den vorderen Rand (10a) in einem Abstand von der Arbeitsfläche (7) hält.

3. Verfahren nach Anspruch 2, **dadurch gekennzeichnet, dass** das Hebesystem (12) wenigstens zwei Abfolgen ausgerichteter Verbindungsstangen (13) enthält, wobei jede Abfolge in einem entsprechenden Hohlraum (15) aufgenommen ist, der in der Arbeitsfläche (7) vorhanden ist, wobei sich jeder Hohlraum (15) orthogonal im Bezug auf die Schnittlinie (T) erstreckt und die ersten Enden (13a) der Verbindungsstangen (13) einer Abfolge gelenkig mit dem unteren Rand (15a) des entsprechenden Hohlraums (15) verbunden sind und die zweiten Enden (13b) der Verbindungsstangen (13) jeder Abfolge mit Hilfe einer Verbindungsstange (14) miteinander verbunden sind, wobei der Endabschnitt der Verbindungsstange (14b) seinerseits mit dem unteren Rand (15a) des entsprechenden Hohlraums (15) gelenkig verbunden ist und die Abfolge der Verbindungsstangen (13) von Stellgliedern (16) gleichzeitig betätigt wird, um den vorderen Rand (10a) des verbleibenden Abschnittes (10) der Scheibe anzuheben.

4. Verfahren nach Anspruch 2, **dadurch gekennzeichnet, dass** das Hebesystem (12) eine Abfolge pneumatischer Zylinder enthält, die in einem entsprechenden Hohlraum aufgenommen sind, der sich in der Arbeitsfläche befindet, wobei sich dieser Hohlraum parallel im Bezug zu der Schnittlinie (T) erstreckt und die pneumatischen Zylinder gleichzeitig betätigt werden, um den vorderen Rand (10a) des verbleibenden Abschnittes (10) der Scheibe anzuheben.

5. Verfahren nach Anspruch 3 oder 4, **dadurch gekennzeichnet, dass** weiterhin Halteeinrichtungen zum Halten des hinteren Randes des verbleibenden Abschnittes der Scheibe vorgesehen sind, wenn der vordere Rand (10a) des verbleibenden Abschnittes (20) der Scheibe angehoben wird.

6. Verfahren nach Anspruch 5, **dadurch gekennzeichnet, dass** die Halteeinrichtungen aus wenigstens zwei ausgerichteten Saugglocken bestehen, die im Bezug auf die Schnittlinie (T) parallel und in der Nähe des hinteren Randes (10b) des verbleibenden Abschnittes der Scheibe angeordnet sind.

7. Verfahren nach Anspruch 1, **dadurch gekennzeichnet, dass** der verbleibende Abschnitt (10) der Scheibe im Bezug auf die Arbeitsfläche (7) vollständig angehoben wird.

8. Verfahren nach Anspruch 7, **dadurch gekennzeichnet, dass** der verbleibende Abschnitt (10) der Scheibe mit Hilfe eines Hebesystems (17) angehoben wird, dass zwischen einer Ruhestellung, in der das System (17) in der Arbeitsfläche (7) enthalten ist, und einer Arbeitsstellung vertikal bewegt werden kann, in der sich das System (17) anhebt und den verbleibenden Abschnitt (10) der Scheibe von der Arbeitsfläche (7) auf Abstand hält.

9. Verfahren nach Anspruch 8, **dadurch gekennzeichnet, dass** das Hebesystem (17) wenigstens zwei Abfolgen ausgerichteter Verbindungsstangen (18) enthält, wobei jede Abfolge in einem entsprechenden Hohlraum (19) aufgenommen ist, der sich in der Arbeitsfläche (7) befindet, wobei sich jeder Hohlraum (19) orthogonal im Bezug auf die Schnittlinie (T) erstreckt und die ersten Enden (18a) der Verbindungsstangen einer Abfolge gelenkig mit dem unteren Rand (19a) des entsprechenden Hohlraums (19) verbunden sind, die zweiten Enden (18b) der Verbindungsstangen jeder Abfolge mit Hilfe einer Verbindungsstange (20) miteinander verbunden sind und die Abfolge von Verbindungsstangen (18) von Stellgliedern (21) gleichzeitig betätigt wird, um den verbleibenden Abschnitt (10) der Scheibe vollständig anzuheben.

10. Verfahren nach Anspruch 8, **dadurch gekennzeichnet, dass** das Hebesystem (12) eine Vielzahl ausgerichteter Abfolgen pneumatischer Zylinder enthält, die in entsprechenden Hohlräumen in der Arbeitsfläche aufgenommen sind, wobei sich diese Hohlräume parallel im Bezug auf die Schnittlinie (T) erstrecken und die pneumatischen Zylinder gleichzeitig betätigt werden, um den verbleibenden Abschnitt (10) der Scheibe anzuheben.

11. Maschine zum Schneiden einer Verbundglasscheibe (2) entlang vorbestimmter Linien (L1, L2, Ln, A1, A2, An, B1, B2, Bn, X1, X2, Xn), wobei die Scheibe (2) eine obere Glasscheibe (3), eine untere Glasscheibe (4) und eine Zwischenfolie (5) enthält, die aus einem synthetischen Kunststoffmaterial besteht,
wobei die Maschine eine Oberfläche (7) zum Tragen der zu schneidenden Verbundscheibe (2) und eine Schneidbrücke (9) zum Ausführen der Schneidvorgänge entlang einer Schnittlinie (T) der Maschine enthält,
wobei die Maschine enthält
- Einrichtungen zum rückwärtigen Bewegen des verbleibenden Abschnittes (10) der Scheibe (2) nach dem Schneiden eines Kopfabschnittes (11) der Scheibe entlang einer querverlaufenden Linie (L1, L2, Ln) und
- Einrichtungen zum Drehen des geschnittenen Kopfabschnittes (11) der Scheibe (2),
- wobei die Maschine **dadurch gekennzeichnet ist, dass** sie enthält:
- Einrichtungen zum wenigstens teilweisen Anheben des verbleibenden Abschnittes der Scheibe (10) im Bezug auf die Trägerfläche (7), nachdem der Kopfabschnitt (11) der Scheibe entlang der querverlaufenden Linie (L1, L2, Ln) geschnitten wurde,
- so dass die Einrichtungen zum Drehen in der Lage sind, ein Ende (11a) des geschnittenen Kopfabschnittes (11) der Scheibe (2) unter den angehobenen vorderen Rand (10a) des verbleibenden Abschnittes (10) der Scheibe (2) zu schieben, um den oben erwähnten geschnittenen Kopfabschnitt (11) zum Ausführen weiterer Schneidvorgänge entlang vorbestimmter Linien (A1, A2, An, B1, B2, Bn, X1, X2, Xn) darauf zu positionieren.

12. Maschine nach Anspruch 11, **dadurch gekennzeichnet, dass** sich die Hebeeinrichtungen (12) dazu eignen, einen Abschnitt der Scheibe anzuheben und sie parallel zu der Trägerfläche (7) zu halten.

13. Maschine nach Anspruch 11, **dadurch gekennzeichnet, dass** die Hebeeinrichtungen (12) dazu eingerichtet sind, einen Abschnitt der Scheibe an ihrem vorderen Rand anzuheben und sie an ihrem hinteren Rand auf der Trägerfläche (7) liegend zu halten.

14. Maschine nach Anspruch 12 oder 13, **dadurch gekennzeichnet, dass** die Hebeeinrichtungen wenigstens ein Hebeelement (14) enthalten, das zwischen einer abgesenkten Ruhestellung, in der die Elemente (14) unter der Trägerfläche (7) sind, und einer angehobenen Arbeitsstellung beweglich ist.

15. Maschine nach Anspruch 12 oder 13, **dadurch gekennzeichnet, dass** die Maschine weiterhin Halteeinrichtungen zum Halten des Scheibenabschnittes in der angehobenen Stellung enthält.

## Revendications

1. Procédé pour effectuer des opérations de découpe le long de lignes prédéterminées (L1, L2, Ln, A1, A2, An, B1, B2, Bn, X1, X2, Xn) sur une feuille de verre (2), par exemple une feuille de verre monobloc ou une feuille de verre stratifiée du type dans lequel la feuille (2) comprend une feuille de verre supérieure (3), une feuille de verre inférieure (4) et un film intermédiaire (5) constitué de matière plastique synthétique,
dans lequel, après la découpe d'une partie de tête (11) de ladite feuille le long d'une ligne transversale (L1, L2, Ln), la partie restante (10) de la feuille (2) est déplacée vers l'arrière, et
- la partie de tête découpée (11) de ladite feuille (2) est tournée,
ledit procédé étant **caractérisé en ce que** :
- après ladite découpe de la partie de tête (11), ladite partie restante (10) de la feuille (2) est au moins partiellement levée par rapport à la surface de travail (7), et
- lorsque ladite partie de tête découpée (11) est tournée, une extrémité (11a) de celle-ci est insérée au-dessous du bord avant surélevé (10a) de la partie restante (10) de la feuille (2) afin de positionner la partie découpée (11) mentionnée ci-dessus pour effectuer des opérations de découpe supplémentaires le long de lignes prédéterminées (A1, A2, An, B1, B2, Bn, X1, X2, Xn).

2. Procédé selon la revendication 1, **caractérisé en ce que** ledit bord avant (10a) de la partie restante (10) de la feuille est levé au moyen d'un système de levage (12) qui est déplaçable verticalement entre une position d'attente dans laquelle le système (12) est incorporé dans la surface de travail (7), et une position opérationnelle dans laquelle le système (12) lève et maintient ledit bord avant (10a) espacé par rapport à la surface de travail (7).

3. Procédé selon la revendication 2, **caractérisé en ce que** le système de levage (12) comprend au moins deux séries de tiges de raccordement alignées (13) où chaque série est logée dans une cavité respective (15) formée dans la surface de travail (7), où chaque cavité (15) est étendue perpendiculairement par rapport à la ligne de découpe (T), et où les premières extrémités (13a) des tiges de raccordement (13) d'une série sont raccordées de manière articulée au bord inférieur (15a) de la cavité respective (15), et les deuxièmes extrémités (13b) des tiges de raccordement (13) de chaque série sont mutuellement raccordées au moyen d'une barre de raccordement (14), où la partie d'extrémité de ladite barre de raccordement (14b) est elle-même raccordée de façon articulée au bord inférieur (15a) de la cavité respective (15), et lesdites séries de tiges de raccordement (13) sont simultanément actionnées par des actionneurs (16) pour lever ledit bord avant (10a) de la partie restante (10) de la feuille.

4. Procédé selon la revendication 2, **caractérisé en ce que** le système de levage (12) comprend une série de cylindres pneumatiques logés dans une cavité respective formée dans la surface de travail, où ladite cavité est étendue parallèlement à la ligne de découpe (T), et où lesdits cylindres pneumatiques sont actionnés simultanément pour lever ledit bord avant (10a) de la partie restante (10) de la feuille.

5. Procédé selon la revendication 3 ou 4, **caractérisé en ce qu'**il est en outre disposé des moyens de maintien pour maintenir le bord arrière de la partie restante de la feuille, lorsque le bord avant (10a) de ladite partie restante (20) de la feuille est levé.

6. Procédé selon la revendication 5, **caractérisé en ce que** les moyens de maintien sont constitués d'au moins deux ventouses alignées agencées parallèlement à la ligne de découpe (T) et à proximité du bord arrière (10b) de la partie restante de la feuille.

7. Procédé selon la revendication 1, **caractérisé en ce que** la partie restante (10) de la feuille est totalement levée par rapport à la surface de travail (7).

8. Procédé selon la revendication 7, **caractérisé en ce que** ladite partie restante (10) de la feuille est levée au moyen d'un système de levage (17) qui est déplaçable verticalement entre une position d'attente dans laquelle le système (17) est incorporé dans la surface de travail (7), et une position opérationnelle dans laquelle le système (17) lève et maintient ladite partie restante (10) de la feuille espacée de la surface de travail (7).

9. Procédé selon la revendication 8, **caractérisé en ce que** le système de levage (17) comprend au moins deux séries de tiges de raccordement alignées (18) où chaque série est logée dans une cavité respective (19) formée dans la surface de travail (7), où chaque cavité (19) est étendue perpendiculairement par rapport à la ligne de découpe (T), et où les premières extrémités (18a) des tiges de raccordement d'une série sont raccordées de manière articulée au bord inférieur (19a) de la cavité respective (19), et les deuxièmes extrémités (18b) des tiges de raccordement de chaque série sont mutuellement raccordées au moyen d'une barre de raccordement (20), et lesdites séries de tiges de raccordement (18) sont simultanément actionnées par des actionneurs (21) pour lever totalement ladite partie restante (10) de la feuille.

10. Procédé selon la revendication 8, **caractérisé en ce que** le système de levage (12) comprend une pluralité de séries alignées de cylindres pneumatiques logés dans des cavités respectives obtenues dans la surface de travail, où lesdites cavités sont étendues parallèlement à la ligne de découpe (T), et où lesdits cylindres pneumatiques sont simultanément actionnés pour lever ladite partie restante (10) de la feuille.

11. Machine pour découper une feuille de verre stratifiée (2), le long de lignes prédéterminées (L1, L2, Ln, A1, A2, An, B1, B2, Bn, X1, X2, Xn), dans laquelle la feuille (2) comprend une feuille de verre supérieure (3), une feuille de verre inférieure (4) et un film intermédiaire (5) constitué de matière plastique synthétique,
où ladite machine comprend une surface (7) pour soutenir la feuille stratifiée (2) à découper, et un pont de découpe (9) pour effectuer les opérations de découpe le long d'une ligne de découpe (T) de la machine,
ladite machine comprenant
- des moyens pour déplacer la partie restante (10) de la feuille (2) vers l'arrière après la découpe d'une partie de tête (11) de ladite feuille le long d'une ligne transversale (L1, L2, Ln), et
- des moyens pour faire tourner la partie de tête découpée (11) de ladite feuille (2),
ladite machine étant **caractérisée en ce qu'**elle comprend :
des moyens pour lever au moins partiellement ladite partie restante de la feuille (10) par rapport à la surface de support (7) après que ladite partie de tête (11) de la feuille ait été découpée le long de ladite ligne transversale (L1, L2, Ln),
- de sorte que lesdits moyens de rotation sont capables d'insérer une extrémité (11a) de la partie de tête découpée (11) de ladite feuille (2) au-dessous du bord avant levé (10a) de la partie restante (10) de la feuille (2), afin de positionner la partie de tête découpée (11) mentionnée ci-dessus pour effectuer d'autres opérations de découpe le long de lignes prédéterminées (A1, A2, An, B1, B2, Bn, X1, X2, Xn) sur celle-ci.

12. Machine selon la revendication 11, **caractérisée en ce que** lesdits moyens de levage (12) sont adaptés pour lever une partie de la feuille et maintenir celle-ci parallèle à la surface de support (7).

13. Machine selon la revendication 11, **caractérisée en ce que** lesdits moyens de levage (12) sont adaptés pour lever une partie de la feuille à son bord avant, et maintenir celle-ci reposant sur la surface de support (7) à son bord arrière.

14. Machine selon la revendication 12 ou 13, **caractérisée en ce que** lesdits moyens de levage comprennent un ou plusieurs éléments de levage (14) déplaçables entre une position d'attente abaissée dans laquelle lesdits éléments (14) sont au-dessous de ladite surface de support (7) et une position opérationnelle levée.

15. Machine selon la revendication 12 ou 13, **caractérisée en ce que** ladite machine comprend en outre des moyens de maintien pour maintenir ladite partie de feuille dans la position levée.
